Europäisches Patentamt

**European Patent Office**

Office européen des brevets

(11) Veröffentlichungsnummer: **0 293 699**

**A1**

(12) **EUROPÄISCHE PATENTANMELDUNG**

(21) Anmeldenummer: **88108166.5**

(22) Anmeldetag: **20.05.88**

(51) Int. Cl.4: **H01B 7/18 , H02G 9/02**

(30) Priorität: **20.05.87 DE 3716946**

(43) Veröffentlichungstag der Anmeldung:
**07.12.88 Patentblatt 88/49**

(84) Benannte Vertragsstaaten:
**ES FR GB IT SE**

(71) Anmelder: **BERU Ruprecht GmbH & Co. KG**
**Wernerstrasse 35**
**D-7140 Ludwigsburg(DE)**

(72) Erfinder: **Krappel, Alfred**
**Elisabethweg 2**
**D-8045 Ismaning(DE)**

(74) Vertreter: **WILHELMS, KILIAN & PARTNER**
**Patentanwälte**
**Eduard-Schmid-Strasse 2**
**D-8000 München 90(DE)**

(54) **Vorrichtung zum Schutz von elektrischen Kabeln, Schläuchen und dgl. vor Beschädigung durch Tierbisse.**

(57) Bei einer Vorrichtung zum Schutz von elektrischen Kabeln, Schläuchen und dgl. (10) vor Beschädigung durch Tierbisse, in Form einer diese umgebenden Ummantelung (14) besteht diese aus einer Vielzahl von ringförmigen, aneinander anliegenden Einzelteilen (16) aus einem unflexiblen, tierbißresistenten Material, z. B. Keramik.

EP 0 293 699 A1

## Vorrichtung zum Schutz von elektrischen Kabeln, Schläuchen und dgl. vor Beschädigung durch Tierbisse.

Die Erfindung betrifft eine Vorrichtung nach dem Oberbegriff des Patentanspruchs 1.

Kraftfahrzeugteile, wie beispielsweise Zündkabel, Kühlwasser- und Bremsschläuche werden häufig bei stehendem Fahrzeug durch Tiere an- bzw. durchgebissen. Diese Schäden werden vorwiegend durch Marder und Wiesel verursacht, es kommen aber auch andere Verursacher, wie beispielsweise Ratten, Mäuse oder Katzen in Frage.

Eine möglichkeit der Schadensverhinderung ist, die Tiere völlig vom Motorraum des Kraftfahrzeuges fernzuhalten. In diesem Zusammenhang hat sich bereits der Vorschlag, den Motorraum nach außen völlig gegen Tiere abzudichten, als nicht durchführbar erwiesen. Ein anderer Weg, die Tiere völlig vom Motorraum fernzuhalten, ist in der DE-OS 36 13 138 beschrieben. Bei der dort beschriebenen Vorrichtung werden die Tiere dadurch vergrämt, daß im Motorraum elektrisch leitende, gegenüber der Karosserie des Kraftfahrzeuges elektrisch isolierte Elemente vorgesehen sind, die bei abgestelltem Kraftfahrzeug mit elektrischen Spannungsimpulsen beaufschlagt werden. Kommen diese Tiere bei ihrer Bewegung oder ihrem Aufenthalt im Motorraum des Kraftfahrzeuges mit den ge nannten Elementen in Berührung, so erhalten sie einen elektrischen Schlag, durch den sie dann aus dem Motorraum wieder vertrieben werden. Diese bekannte Vorrichtung hat aber den Nachteil, daß zur Erzeugung der elektrischen Spannungsimpulse elektrische Energie erforderlich ist, die dem Akkumulator des Kraftfahrzeuges entnommen wird. Wird ein mit einer derartigen Vorrichtung ausgerüstetes Kraftfahrzeug über einen längeren Zeitraum bei eingeschalteter Schutzvorrichtung abgestellt, so kann es vorkommen, daß der Energievorrat des Akkumulators bei einer gewünschten Inbetriebnahme des Kraftfahrzeuges aufgebraucht ist, mit der Folge, daß das Kraftfahrzeug nicht mehr gestartet werden kann.

Eine andere Möglichkeit der Schadensverhinderung ist, Schutzmaßnahmen für einzelne Kraftfahrzeugteile, wie beispielsweise elektrische Kabel, Schläuche und dgl. vorzusehen. Aus der ATZ Automobil Technische Zeitschrift Nr. 87 (1985) 6, Seite 287, ist bereits eine derartige Schutzmaßnahme in Form eines Kunststoffwellrohres bekannt, durch das ein bestimmtes Kraftfahrzeugteil, beispielsweise ein Zündkabel ummantelt wird. Die Verwendung von Kunststoffwellrohren hat aber den Nachteil, daß sie, wenn sie einen sicheren Schutz gewährleisten sollen, nur wenig flexibel sind oder daß sie, wenn eine bestimmte Flexibilität erforderlich ist, die ummantelten Kraftfahrzeugteile vor Tierbissen nicht sicher schützen können, da das bei der Herstellung flexibler Kunststoffwellrohre verwendete elastische Kunststoffmaterial von den genannten Tieren durchbissen werden kann.

Es ist daher Aufgabe der Erfindung, eine Vorrichtung eingangs genannter Art anzugeben, die einen sicheren Schutz der ummantelten Kraftfahrzeugteile gewährleistet und dennoch hinreichend flexibel ist, um auch stark gekrümmte Kraftfahrzeugteile schützen zu können.

Diese Aufgabe wird erfindungsgemäß durch die Merkmale des kennzeichnenden Teils des Patentanspruchs 1 erfüllt.

Bei der erfindungsgemäßen Vorrichtung werden die ringförmigen Einzelteile zum Schutz eines draht- bzw. rohrförmigen Kraftfahrzeugteiles auf dieses wie Perlen einer Perlenkette aufgefädelt. Dabei kann die Ummantelungslänge in einfacher Weise durch die Anzahl der verwendeten ringförmigen Einzelteile bestimmt werden. Es wird also zur Realisierung unterschiedlicher Ummantelungslängen kein eigenes Werkzeug benötigt, so daß die Montage der erfindungsgemäßen Ummantelung in einfacher Weise möglich ist. Da die erfindungsgemäße Ummantelung nicht, wie beim Stand der Technik, aus einem einzigen Teil, sondern aus einer Vielzahl von einander unabhängigen Einzelteilen besteht, kann als Material zur Herstellung dieser Einzelteile ein völlig unflexibles und unnachgiebiges Material, z. B. Keramik, verwendet werden. Ein solches Material ist im Unterschied zu den für die Herstellung von flexiblen Kunststoffwellrohren erforderlichen flexiblen Materialien völlig durchbeißsicher. Die Flexibilität der Ummantelung insgesamt ergibt sich aus der weitgehenden Unabhängigkeit der die Ummantelung bildenden ringförmigen Einzelteile voneinander. Ein weiterer Vorteil der erfindungsgemäßen Vorrichtung liegt in ihrer kostengünstigen Herstellbarkeit.

Weist jedes ringförmige Einzelteil nach einer Weiterbildung der Erfindung an einer Ringseite einen Fortsazt auf, der zumindest an seinem freien Ende einen gegenüber dem Durchmesser auf der dem Fortsatz abgewandten Ringseite kleineren Außendurchmesser hat, so können die ringförmigen Einzelteile bis zu einem bestimmten Grad ineinander geschoben werden. Es wird dadurch ein gewisser Verbund zwischen den Ringförmigen Einzelteilen geschaffen. Durch das Ineinandergreifen der ringförmigen Einzelteile wird ferner erreicht, daß sich auch bei starken Krümmungen der zu - schützenden Kabel, Schläuche und dgl. am äußeren Umfang der Krümmung keine Lücken bilden.

Nach einer weiteren bevorzugten Ausführungsform der Erfindung verjüngt sich der Fortsatz in Richtung seines freien Endes konisch und nimmt der Innendurchmesser des ringförmigen Einzelteiles von der dem Fortsatz abgewandten Ringseite in Richtung des freien Endes des Fortsatzes entsprechend dessen Konus ab. Durch diese Ausbildung der Einzelteile wird erreicht, daß diese aufeinander zentriert werden. Es ergibt sich dadurch eine einheitlich wirkende Ummantelung.

Nach einer bevorzugten Weiterbildung der Erfindung ist jedes ringförmige Einzelteile beim Ansatz des Fortsatzes stufenförmig ausgebildet, wobei die Stufenhöhe zumindest annähernd der Wandungsstärke des ringförmigen Einzelteiles auf dessen dem Fortsatz abgewandten Ringseite entspricht. Die stufenförmige Ausbildung dient als Anschlag, so daß die ringförmigen Einzelteile nur bis zu einem bestimmten Grad zusammengeschoben werden können. Es wird dadurch auch ein Verklemmen der einzelnen ringförmigen Teile sicher vermieden.

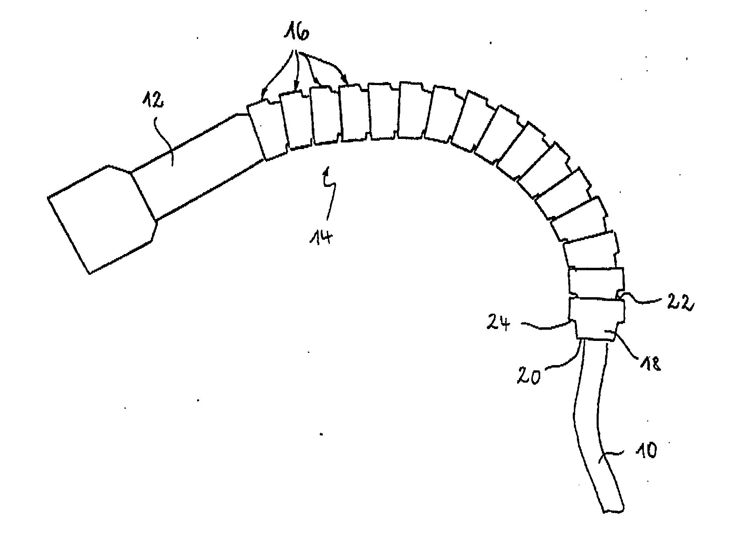

In der einzigen Figur ist ein Ausführungsbeispiel der Erfindung dargestellt.

Die einzige Figur zeigt einen Ausschnitt eines Zündkabels 10, das an seinem einen Ende mit einem Zündkerzenstecker 12 versehen ist. Das Zündkabel 10 ist zur besseren Veranschaulichung der Erfindung nur teilweise mit einer Ummantelung 14 umgeben, die aus einer Vielzahl von ringförmigen Einzelteilen 16 besteht. Diese sind aus einem unflexiblen Material, z. B. Keramik, gefertigt, das von den in Frage kommenden Tieren, wie Marder oder Wiesel nicht durchbissen werden kann. Jedes ringförmige Einzelteil 16 weist an einer Ringseite einen Fortsatz 18 auf, der an seinem freien Ende 20 einen gegenüber dem Innendurchmesser auf der dem Fortsatz 18 abgewandten Ringseite 22 kleineren Außendurchmesser hat. Der Fortsatz 18 verjüngt sich in Richtung seines freien Endes 20 konisch. Ferner nimmt der Innendurchmesser des ringförmigen Einzelteiles 16 von der dem Fortsatz 18 abgewandten Ringseite 22 in Richtung des freien Endes 20 des Fortsatzes 18 entsprechend dessen Konus ab. Jedes Einzelteil 16 ist beim Ansatz des Fortsatzes mit einer ringförmig ausgebildeten Stufe 24 versehen, deren Stufenhöhe annähernd der Wandungsstärke des ringförmigen Einzelteiles 16 auf dessen dem Fortsatz 18 abgewandten Ringseite 22 entspricht. Durch die spezifische Gestaltung der ringförmigen Einzelteile 16 wird erreicht, daß diese aufeinander zentriert werden, wodurch sich eine einheitlich wirkende Ummantelung ergibt. Durch das Ineinandergreifen der ringförmigen Einzelteile wird ferner erreicht, daß selbst bei starken Krümmungen der zu schützenden Kabel, Schläuche oder dgl. sich am äußeren Umfang der Krümmungen keine Lücken bilden.

## Ansprüche

1. Vorrichtung zum Schutz von elektrischen Kabeln, Schläuchen und dgl. vor Beschädigung durch Tierbisse, in Form einer diese umgebenden Ummantelung, dadurch gekennzeichnet, daß die Ummantelung (14) aus einer Vielzahl von ringförmigen, aneinander anliegenden Einzelteilen (16) aus einem unflexiblen, tierbißresistenten Material, z. B. Keramik, besteht.

2. Vorrichtung nach Anspruch 1, dadurch gekennzeichnet, daß jedes ringförmige Einzelteil (16) an einer Ringseite einen Fortsatz (18) aufweist, der zumindest an seinem freien Ende (20) einen gegenüber dem Innendurchmesser auf der dem Fortsatz (18) abgewandten Ringseite (22) kleineren Außendurchmesser hat.

3. Vorrichtung nach Anspruch 2, dadurch gekennzeichnet, daß sich der Fortsatz (18) in Richtung seines freien Endes (20) konisch verjüngt und daß der Innendurchmesser des ringförmigen Einzelteils (16) von der dem Fortsatz (18) abgewandten Ringseite in Richtung des freien Endes (20) des Fortsatzes (18) entsprechend dessen Konus abnimmt.

4. Vorrichtung nach Anspruch 2 oder 3, dadurch gekennzeichnet, daß jedes ringförmige Einzelteil (16) beim Ansatz des Fortsatzes (18) stufenförmig ausgebildet ist. wobei die Stufenhöhe zumindest annähernd der Wandungsstärke des ringförmigen Einzelteils (16) auf dessen dem Fortsatz (18) abgewandten Ringseite (22) entspricht.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 110 008 (SIEMENS) * Seite 5, Zeile 27 - Seite 6, Zeile 13; Ansprüche 1,2; Figuren 1-4 * --- | 1,2,4 | H 01 B 7/18 H 02 G 9/02 |
| A | DE-A-2 315 954 (EILENTROPP) * Seite 4, letzter Absatz; Anspruch 1; Figur 2 * ----- | 1-4 | |

RECHERCHIERTE SACHGEBIETE (Int. Cl.4)

H 01 B 7/00
H 01 B 11/00
H 02 G 9/00

Der vorliegende Recherchenbericht wurde für alle Patentansprüche erstellt

| Recherchenort | Abschlußdatum der Recherche | Prüfer |
|---|---|---|
| DEN HAAG | 09-09-1988 | DEMOLDER J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument